# EUROPEAN PATENT APPLICATION

(11) **EP 3 560 683 A1**
(43) Date of publication of application: **30.10.2019**
(21) Application number: 17883092.3
(22) Date of filing: 12.12.2017
(51) Int. Cl.: B29C 64/112, B29C 64/40, B33Y 10/00, B33Y 70/00

(54) **INK SET FOR OPTICAL SHAPING AND METHOD FOR PRODUCING OPTICALLY SHAPED OBJECTS USING SAME**

(30) Priority: 22.12.2016 JP 2016249654
(71) Applicant: Maxell Holdings, Ltd., Otokuni-gun, Kyoto 618-8525 (JP)
(72) Inventor: OTA Hiroshi, Kyoto 618-8525 (JP); OKUSHIRO Keisuke, Kyoto 618-8525 (JP)
(74) Representative: Diehl & Partner GbR
(86) International application number: PCT/JP2017/044500
(87) International publication number: WO 2018/116900

(57) **Abstract**

An ink set for stereolithography according to the present invention is an ink set for stereolithography to be used in ink-jet stereolithography, and the ink set for stereolithography includes a composition for a support material to be used to shape a support material and a composition for a model material to be used to shape a model material. When the composition for a support material is ejected onto a support material cured article, which is a cured article of the composition for a support material, a contact angle of the composition for a support material with respect to the support material cured article at 0.3 seconds after the composition for a support material hits the support material cured article is taken as a contact angle SS. When the composition for a model material is ejected onto a support material cured article, which is a cured article of the composition for a support material, a contact angle of the composition for a model material with respect to the support material cured article at 0.3 seconds after the composition for a model material hits the support material cured article is taken as a contact angle SM. The contact angle SS and the contact angle SM are 25 degrees or more and 35 degrees or less.

## Description

### Technical Field

The present invention relates to an ink set for stereolithography to be used to shape a support material and a model material in ink-jet stereolithography, and a method for manufacturing a stereolithographic article using the same.

### Background Art

Recently, a plurality of methods in which a 3D printer is used to produce a shaped article have been proposed. In particular, ink-jet stereolithography using an ink-jet technology, which is realized by a 3D printer, is known. Ink-jet stereolithography is a method in which curable ink ejected from an ink-jet head is cured through irradiation with light such as ultraviolet rays or the like and layered, and a shaped article is thereby produced. The ink-jet stereolithography is suitable for producing a shaped article that is required to be accurately formed because layers are formed by ejecting minute droplets of curable ink, and thus a highly accurate shaped article with smooth surface can be formed.

For example, Patent Document 1 proposes a composition for a model material containing a monofunctional ethylenic unsaturated monomer, a polyfunctional ethylenic unsaturated monomer having no urethane groups, a polyfunctional ethylenic unsaturated monomer having a urethane group, and a photopolymerization initiator, and a composition for a support material containing a water-soluble monofunctional ethylenic unsaturated monomer, an alkylene oxide adduct having an oxypropylene group, and a photopolymerization initiator. Patent Document 1 states that a stereolithographic product made of a two-component photo-curable resin composition using the composition for a model material and the composition for a support material together is formed with an excellent shaping accuracy.

### Prior Art Documents

### Patent Documents

Patent Document 1: JP 2012-111226A

### Disclosure of Invention

### Problem to be Solved by the Invention

However, Patent Document 1 does not in any way investigate the stereolithographic product shaping accuracy of a stereolithographic product that is actually formed by irradiating the two-component photo-curable resin composition ejected from an ink-jet printer with ultraviolet rays. Therefore, there is room for further investigation of the stereolithographic product shaping accuracy of a stereolithographic product that is actually formed through ink-jet stereolithography.

The present invention was made in view of the aforementioned circumstances, and provides an ink set for stereolithography that includes a composition for a support material and a composition for a model material and is used to form a stereolithographic article with an excellent shaping accuracy in ink-jet stereolithography.

### Means for Solving Problem

An ink set for stereolithography of the present invention is to be used in ink-jet stereolithography and includes: a composition for a support material to be used to shape a support material; and a composition for a model material to be used to shape a model material, wherein when the composition for a support material is ejected onto a support material cured article, which is a cured article of the composition for a support material, a contact angle of the composition for a support material with respect to the support material cured article at 0.3 seconds after the composition for a support material hits the support material cured article is taken as a contact angle SS, when the composition for a model material is ejected onto a support material cured article, which is a cured article of the composition for a support material, a contact angle of the composition for a model material with respect to the support material cured article at 0.3 seconds after the composition for a model material hits the support material cured article is taken as a contact angle SM, and the contact angle SS and the contact angle SM are 25 degrees or more and 35 degrees or less.

A method for manufacturing a stereolithographic article of the present invention is a method for manufacturing a stereolithographic article in which the above-mentioned ink set for stereolithography is used, the method including: forming a stereolithographic article precursor including support materials and model materials by repeating a step of irradiating the inks of the ink set for stereolithography ejected from an ink-jet printer with an energy beam; and dissolving and removing the support materials by immersing the stereolithographic article precursor in water.

### Effects of the Invention

With the present invention, it is possible to provide an ink set for stereolithography that can be used to form a stereolithographic article with an excellent shaping accuracy through ink-jet stereolithography.

### Brief Description of Drawings

FIG. 1 is a schematic diagram showing a state in which a composition for a support material and a composition for a model material are ejected onto a support material cured article.
FIG. 2 is a schematic diagram showing a state in which the composition for a support material and the composition for a model material are ejected onto a model material cured article.
FIG. 3 is a schematic side view showing a state in which support material ink and model material ink are ejected and are irradiated with an energy beam in an ink-jet shaping method.
FIG. 4 is a schematic side view showing a state in which the support material ink and the model material ink are ejected in the ink-jet shaping method.
FIG. 5 is a schematic side view showing a state in which the support material ink and the model material ink are irradiated with an energy beam in the ink-jet shaping method.
FIG. 6 is a schematic side view of a shaped article precursor including support materials and model materials formed through the ink-jet shaping method.
FIG. 7 is a schematic side view of a shaped article formed through the ink-jet shaping method.
FIG. 8 is an external view of shaped articles shaped in examples and comparative examples.

### Description of the Invention

Hereinafter, embodiments of the present invention will be described.

### Embodiment of ink set for stereolithography

An ink set for stereolithography of this embodiment is to be used in ink-jet stereolithography and includes: a composition for a support material to be used to shape a support material; and a composition for a model material to be used to shape a model material, wherein when the composition for a support material is ejected onto a support material cured article, which is a cured article of the composition for a support material, a contact angle of the composition for a support material with respect to the support material cured article at 0.3 seconds after the composition for a support material hits the support material cured article is taken as a contact angle SS, when the composition for a model material is ejected onto a support material cured article, which is a cured article of the composition for a support material, a contact angle of the composition for a model material with respect to the support material cured article at 0.3 seconds after the composition for a model material hits the support material cured article is taken as a contact angle SM, and the contact angle SS and the contact angle SM are 25 degrees or more and 35 degrees or less. It is preferable that the difference between the contact angle SS and the contact angle SM is 10 degrees or less.

The term "contact angle" as used herein means an angle between the plane of a droplet and the plane of a solid at a portion where the droplet is in contact with the surface of the solid, and is used as an index of the so-called wettability of a droplet. The reason why the contact angle is measured 0.3 seconds after the composition (droplet) hits the cured article (the plane of the solid) is that a period of time elapsed between when the composition hits the cured article and when the composition is cured through the irradiation with an energy beam is normally 0.3 seconds.

Setting the contact angle SS and the contact angle SM to be within the above-mentioned ranges makes it possible to form a stereolithographic article with an excellent shaping accuracy through ink-jet stereolithography.

In the ink set for stereolithography of this embodiment, when the composition for a support material is ejected onto a model material cured article, which is a cured article of the composition for a model material, a contact angle of the composition for a support material with respect to the model material cured article at 0.3 seconds after the composition for a support material hits the model material cured article is taken as a contact angle MS, when the composition for a model material is ejected onto a model material cured article, which is a cured article of the composition for a model material, a contact angle of the composition for a model material with respect to the model material cured article at 0.3 seconds after the composition for a model material hits the model material cured article is taken as a contact angle MM, and the contact angle MS and the contact angle MM are preferably 35 degrees or more and 70 degrees or less. Furthermore, it is preferable that the difference between the contact angle MS and the contact angle MM is 20 degrees or less.

Setting the contact angle MS and the contact angle MM to be within the above-mentioned ranges makes it possible to form a stereolithographic article with a further excellent shaping accuracy through ink-jet stereolithography.

In the ink set for stereolithography of this embodiment, it is preferable that the composition for a support material contains a water-soluble monofunctional ethylenic unsaturated monomer, a water-soluble resin, and a photopolymerization initiator. This makes it possible to form a support material having both excellent water removal properties and excellent supportability.

More specifically, in order to form the support material having both excellent water removal properties and excellent supportability, it is preferable that, in the composition for a support material, the water-soluble monofunctional ethylenic unsaturated monomer includes a (meth)acrylamide derivative, the water-soluble resin has at least one group selected from the group consisting of an oxyethylene group, an oxypropylene group, and an oxytetramethylene group, and the photopolymerization initiator includes an acylphosphine oxide-based photopolymerization initiator.

In the ink set for stereolithography of this embodiment, it is preferable that the composition for a model material contains a monofunctional ethylenic unsaturated monomer, a polyfunctional ethylenic unsaturated monomer, and a photopolymerization initiator. This makes it possible to form a model material that hardly swells and deforms due to water or absorbed moisture.

More specifically, in order to form the model material that hardly swells and deforms due to water and absorbed moisture, it is preferable that the monofunctional ethylenic unsaturated monomer includes at least one type of water-insoluble monofunctional ethylenic unsaturated monomer, the water-insoluble monofunctional ethylenic unsaturated monomer includes at least one type of water-insoluble monofunctional ethylenic unsaturated monomer having a number-average molecular weight (Mn) of 500 or more, and the photopolymerization initiator includes an acylphosphine oxide-based photopolymerization initiator. In this specification, the number-average molecular weight is measured through gel permeation chromatography (GPC).

Next, the contact angles of the composition for a support material and composition for a model material of the ink set for stereolithography of this embodiment will be described with reference to the drawings.

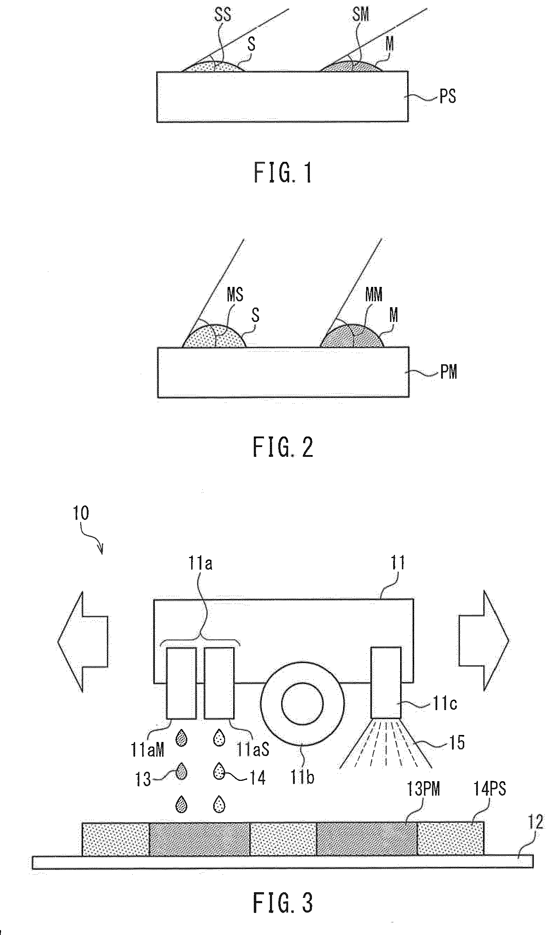

FIG. 1 is schematic diagram showing a state of a composition for a support material S and a composition for a model material M at 0.3 seconds after the compositions ejected toward a support material cured article PS, which is a cured article of the above-mentioned composition for a support material, hit the support material cured article PS. In FIG. 1, a contact angle SS of the composition for a support material S with respect to the support material cured article PS and a contact angle SM of the composition for a model material M with respect to the support material cured article PS are set to be 25 degrees or more and 35 degrees or less. It is preferable that the difference between the contact angle SS and the contact angle SM is 10 degrees or less. Setting the contact angle SS and the contact angle SM to be within the above-mentioned ranges makes it possible to form a stereolithographic article with an excellent shaping accuracy through ink-jet stereolithography. In order to achieve this, it is necessary to set the contact angle SS and the contact angle SM to be within the above-mentioned ranges by adjusting the blend amounts of the components of the composition for a support material S and the blend amounts of the components of the composition for a model material M.

FIG. 2 is schematic diagram showing a state of the composition for a support material S and the composition for a model material M at 0.3 seconds after the compositions ejected toward a model material cured article PM, which is a cured article of the above-mentioned composition for a model material, hit the support material cured article PM. In FIG. 2, a contact angle MS of the composition for a support material S with respect to the model material cured article PM and a contact angle MM of the composition for a model material M with respect to the model material cured article PM are set to be 35 degrees or more and 70 degrees or less. It is preferable that the difference between the contact angle MS and the contact angle MM is 20 degrees or less. Setting the contact angle MS and the contact angle MM to be within the above-mentioned ranges makes it possible to form a stereolithographic article with a further excellent shaping accuracy through ink-jet stereolithography. In order to achieve this, it is necessary to set the contact angle MS and the contact angle MM to be within the above-mentioned ranges by adjusting the blend amounts of the components of the composition for a support material S and the blend amounts of the components of the composition for a model material M.

In this specification, the contact angles are measured under conditions of a temperature of 20 to 25°C, a relative humidity of 40 to 70%, and an atmospheric pressure of 985 to 1025 hPa. In general, the support material cured article PS and the model material cured article PM are also formed under atmospheric conditions of a temperature of 20 to 25°C, a relative humidity of 40 to 70%, and an atmospheric pressure of 985 to 1025 hPa.

Hereinafter, the composition for a support material and the composition for a model material of the ink set for stereolithography of this embodiment will be described.

### Composition for a support material

The composition for a support material can be produced by mixing the following components.

### Water-soluble monofunctional ethylenic unsaturated monomer

The above-mentioned water-soluble monofunctional ethylenic unsaturated monomers polymerize, and the resultant polymer becomes a constituent component of the support material and exhibits supportability.

Examples of the water-soluble monofunctional ethylenic unsaturated monomer include hydroxy group-containing (meth)acrylates having 5 to 15 carbon atoms (C5-15) (e.g., hydroxyethyl (meth)acrylate, hydroxypropyl (meth)acrylate, and 4-hydroxybutyl (meth)acrylate), alkylene oxide adduct-containing (meth)acrylates having a number-average molecular weight (Mn) of 200 to 1000 (e.g., polyethylene glycol (abbreviated to "PEG" hereinafter) mono(meth)acrylate, monoalkoxy (C1-4) polyethylene glycol mono(meth)acrylate, polypropylene glycol (abbreviated to "PPG" hereinafter) mono(meth)acrylate, monoalkoxy (C1-4)polypropylene glycol mono(meth)acrylate, and mono(meth)acrylate of PEG-PPG block polymer), C3-15 (meth)acrylamide derivatives (e.g., (meth)acrylamide, N-methyl (meth)acrylamide, N-ethyl (meth)acrylamide, N-propyl (meth)acrylamide, N-butyl (meth)acrylamide, N,N'-dimethyl (meth)acrylamide, N,N'-diethyl (meth)acrylamide, N-hydroxyethyl (meth)acrylamide, N-hydroxypropyl (meth)acrylamide, and N-hydroxybutyl (meth)acrylamide), and (meth)acryloylmorphiline. The above-mentioned water-soluble monofunctional ethylenic unsaturated monomers may be used alone or in combination of two or more.

It is preferable that the water-soluble monofunctional ethylenic unsaturated monomer includes a (meth)acrylamide derivative having 3 to 15 carbon atoms. The reason for this is that the supportability of the support material can be further improved.

The content of the water-soluble monofunctional ethylenic unsaturated monomer is preferably 19 parts by mass or more and 80 parts by mass or less with respect to the total mass of the composition for a support material taken as 100 parts by mass. If the content is smaller than 19 parts by mass, the supportability of the support material is likely to be impaired. If the content exceeds 80 parts by mass, the water removal properties of the support material are likely to be impaired.

### Water-soluble resin

The above-mentioned water-soluble resin is used to impart appropriate hydrophilicity to the support material. Adding the water-soluble resin makes it possible to obtain a support material having both water removal properties and supportability.

It is preferable that the water-soluble resin has at least one group selected from the group consisting of an oxyethylene group, an oxypropylene group, and an oxytetramethylene group. The reason for this is that the water removal properties of the support material can be further improved without reducing its supportability. Specific examples of the water-soluble resin include polyoxyalkylene glycol having at least one group selected from the group consisting of an oxyethylene group, an oxypropylene group, and an oxytetramethylene group, such as polyethylene glycol, polypropylene glycol, poly(oxytetramethylene) glycol, polyoxytetramethylene polyoxyethylene glycol, or polyoxytetramethylene polyoxypropylene glycol. The water-soluble resins may be used alone or in combination of two or more.

The content of the water-soluble resin is preferably 15 parts by mass or more and 75 parts by mass or less with respect to the total mass of the composition for a support material taken as 100 parts by mass. If the content is smaller than 15 parts by mass, the water removal properties of the support material are likely to be impaired. If the content exceeds 75 parts by mass, the supportability of the support material is likely to be impaired.

### Photopolymerization initiator

The above-mentioned photopolymerization initiator initiates a monomer polymerization reaction or a monomer cross-linking reaction using an energy beam. The composition for a support material of this embodiment contains the photopolymerization initiator, thus making it possible to cure the ejected composition for a support material through irradiation with an energy beam in ink-jet stereolithography.

For example, an energy beam selected as appropriate from ultraviolet rays, near ultraviolet rays, visible rays, infrared rays, far infrared rays, and the like can be used as the energy beam with which the photopolymerization initiator is irradiated.

There is no particular limitation on the photopolymerization initiator as long as it can initiate the polymerization with low energy, but it is preferable to use a photopolymerization initiator containing at least one compound selected from the group consisting of acylphosphine oxide-based compounds, α-aminoalkylphenone-based compounds, and thioxanthone-based compounds as the photopolymerization initiator. These compounds may be used in combination. In particular, it is preferable that the photopolymerization initiator contains an acylphosphine oxide compound. This is for the purpose of preventing the cured article from turning yellow.

Specific examples of the acylphosphine oxide-based compounds include 2,4,6-trimethylbenzoyldiphenylphosphine oxide, 2,6-dimethoxybenzoyldiphenylphosphine oxide, 2,6-dichlorobenzoyldiphenylphosphine oxide, 2,3,5,6-tetramethylbenzoyldiphenylphosphine oxide, 2,6-dimethylbenzoyldiphenylphosphine oxide, 4-methylbenzoyldiphenylphosphine oxide, 4-ethylbenzoyldiphenylphosphine oxide, 4-isopropylbenzoyldiphenylphosphine oxide, 1-methylcyclohexanoylbenzoyldiphenylphosphine oxide, bis(2,4,6-trimethylbenzoyl)-phenylphosphine oxide, 2,4,6-trimethylbenzoylphenylphosphinic acid methyl ester, 2,4,6-trimethylbenzoylphenylphosphinic acid isopropyl ester, and bis(2,6-dimethoxybenzoyl)-2,4,4-trimethylpentylphosphine oxide. These compounds may be used alone or by mixing two or more. An example of commercially available acylphosphine oxide compounds is "DAROCURE TPO", which is manufactured by BASF.

Specific examples of the α-aminoalkylphenone-based compounds include 2-methyl-1-[4-(methylthio)phenyl]-2-morpholinopropan-1-one, 2-benzyl-2-dimethylamino-1-(4-morpholinophenyl)butanone-1, and 2-methyl-1-[4-(methoxythio)-phenyl]-2-morpholinopropan-2-one. These compounds may be used alone or by mixing two or more. Examples of commercially available α-aminoalkylphenone compounds include "IRGACURE 369" and "IRGACURE 907", which are manufactured by BASF.

Specific examples of the thioxanthone-based compounds include thioxanthone, 2-methylthioxanthone, 2-ethylthioxanthone, 2-isopropylthioxanthone, 4-isopropylthioxanthone, 2-chlorothioxanthone, 2,4-dimethylthioxanthone, 2,4-diethylthioxanthone, 2,4-dichlorothioxanthone, and 1-chloro-4-propoxythioxanthone. These compounds may be used alone or by mixing two or more. Examples of commercially available thioxanthone compounds include "KAYACURE DETX-S", which is manufactured by Nippon Kayaku Co., Ltd., and "Chivacure ITX", which is manufactured by Double Bond Chemical Ind. Co., Ltd.

The content of the photopolymerization initiator is preferably 2 parts by mass or more and 20 parts by mass or less with respect to the total mass of the composition for a support material taken as 100 parts by mass. If the content is smaller than 2 parts by mass, the curability of the support material is likely to be impaired. If the content exceeds 20 parts by mass, the low-temperature stability of the composition for a support material is likely to be impaired.

### Surface controlling agent

It is preferable that the composition for a support material further contains a surface controlling agent. When the composition for a support material contains the surface controlling agent, exhibited is an effect of adjusting the surface tension of the ink such that surface tension suitable for ink-jet ink is obtained.

Examples of the surface controlling agent include silicone compounds and fluorine compounds. In particular, silicone compounds are preferable.

Specific examples (whose trade names are shown) of the silicone compounds include BYK-300, BYK-302, BYK-306, BYK-307, BYK-310, BYK-315, BYK-320, BYK-322, BYK-323, BYK-325, BYK-330, BYK-331, BYK-333, BYK-337, BYK-344, BYK-370, BYK-375, BYK-377, BYK-UV3500, BYK-UV3510, and BYK-UV3570, which are manufactured by BYK-chemie; TEGO-Rad2100, TEGO-Rad2200N, TEGO-Rad2250, TEGO-Rad2300, TEGO-Rad2500, TEGO-Rad2600, and TEGO-Rad2700, which are manufactured by Evonik Japan; and GLANOL 100, GLANOL 115, GLANOL 400, GLANOL 410, GLANOL 435, GLANOL 440, GLANOL 450, B-1484, POLYFLOW ATF-2, KL-600, UCR-L72, and UCR-L93, which are manufactured by Kyoeisha Chemical Co., Ltd. These compounds may be used alone or by mixing two or more.

The content of the surface controlling agent is preferably 0.005 parts by mass or more and 3.0 parts by mass or less with respect to the total mass of the composition for a support material taken as 100 parts by mass. If the content is smaller than 0.005 parts by mass, the effect of the surface controlling agent is not likely to be exhibited. If the content exceeds 3.0 parts by mass, undissolved materials are likely to remain, or bubbles are likely to be formed, in the composition for a support material.

### Water-soluble organic solvent

It is preferable that the composition for a support material further contains a water-soluble organic solvent. When the composition for a support material contains the water-soluble organic solvent, exhibited is an effect of adjusting the viscosity of the ink such that viscosity suitable for ink-jet ink is obtained.

Examples of the water-soluble organic solvent include ethylene glycol, diethylene glycol, triethylene glycol, propylene glycol, dipropylene glycol, 2-pyrrolidone, N-methyl-2-pyrrolidone, 1,2-propanediol, 1,3-propanediol, 1,2-butanediol, 1,3-butanediol, 1,4-butanediol, 2,3-butanediol, 2,2-dimethyl-1,3-propanediol, 2-methyl-1,3-propanediol, 1,2-pentanediol, 1,5-pentanediol, 2,4-pentanediol, 1,2-hexanediol, 3,5-dimethyl-3-hexyne-2,5-diol, 2,5-hexanediol, hexylene glycol, 1,6-hexanediol, 2-ethyl-1,3-hexanediol, 2,2,4-trimethyl-1,3-pentanediol, 2,5-dimethyl-2,5-hexanediol, sulfolane, 1,4-cyclohexanedimethanol, 2,2-thiodiethanol, 3-pyridylcarbinol, propylene glycol monomethyl ether, dipropylene glycol methyl ether, tripropylene glycol methyl ether, propylene glycol ethyl ether, propylene glycol n-propyl ether, dipropylene glycol n-propyl ether, tripropylene glycol n-propyl ether, propylene glycol n-butyl ether, dipropylene glycol n-butyl ether, tripropylene glycol n-butyl ether, propylene glycol t-butyl ether, dipropylene glycol t-butyl ether, propylene glycol phenyl ether, ethylene glycol methyl ether, diethylene glycol methyl ether, triethylene glycol methyl ether, ethylene glycol ethyl ether, diethylene glycol ethyl ether, triethylene glycol ethyl ether, ethylene glycol n-propyl ether, ethylene glycol n-butyl ether, diethylene glycol n-butyl ether, triethylene glycol n-butyl ether, ethylene glycol n-hexyl ether, diethylene glycol n-hexyl ether, and ethylene glycol phenyl ether.

The content of the water-soluble organic solvent is preferably 30 parts by mass or less with respect to the total mass of the composition for a support material taken as 100 parts by mass. If the content exceeds 30 parts by mass, the water-soluble organic solvent will separate from the support material and exude therefrom, and thus the supportability is likely to be impaired.

### Ink storage stabilizer

It is preferable that the composition for a support material further contains an ink storage stabilizer. The polymerization of the above-mentioned water-soluble monofunctional ethylenic unsaturated monomer can thus be suppressed even though the composition for a support material is stored for a long period of time, thus making it possible to prevent head clogging while the composition for a support material is being ejected in an ink-jet printer.

Examples of the ink storage stabilizer include hindered amine-based compounds (HALSs), phenol-based antioxidants, and phosphorus-based antioxidants. Specific examples thereof include hydroquinone, methoquinone, benzoquinone, p-methoxyphenol, hydroquinone monomethyl ether, hydroquinone monobutyl ether, TEMPO, TEMPOL, cupferron Al, t-butylcatechol, and pyrogallol. These ink storage stabilizers can be used alone or in combination of two or more.

Among the above-mentioned ink storage stabilizers, HALSs, methoquinone, and hydroquinone are preferable. In particular, it is preferable to use HALSs and hydroquinone in combination, and it is more preferable to use these three compounds, namely HALSs, methoquinone, and hydroquinone, in combination.

In general, the storage stabilizer is used at a content of 0.005 parts by mass or more and 1 part by mass or less with respect to the total mass of the composition for a support material taken as 100 parts by mass. The content is more preferably 0.05 parts by mass or more and 0.5 parts by mass or less. If the content is smaller than 0.005 parts by mass, sufficient ink storage stability cannot be imparted. If the content exceeds 1 part by mass, the composition for a model material is likely to be insufficiently cured.

### Composition for a model material

The composition for a model material can be produced by mixing the following components.

### Monofunctional ethylenic unsaturated monomer

The monofunctional ethylenic unsaturated monomers polymerize together with the polyfunctional ethylenic unsaturated monomers, which will be described later, and thus form a constituent component of the model material.

Although water-soluble monofunctional ethylenic unsaturated monomers and water-insoluble monofunctional ethylenic unsaturated monomers can be used as the monofunctional ethylenic unsaturated monomer, it is preferable that the monofunctional ethylenic unsaturated monomer includes at least one type of water-insoluble monofunctional ethylenic unsaturated monomer, and the water-insoluble monofunctional ethylenic unsaturated monomer includes at least one type of water-insoluble monofunctional ethylenic unsaturated monomer having a number-average molecular weight of 500 or more.

Examples of the water-soluble monofunctional ethylenic unsaturated monomer include C5-15 hydroxy group-containing (meth)acrylates (e.g., hydroxyethyl (meth)acrylate, hydroxypropyl (meth)acrylate, and 4-hydroxybutyl (meth)acrylate), alkylene oxide adduct-containing (meth)acrylates having an Mn of 200 to 2000 (e.g., polyethylene glycol (abbreviated to "PEG" hereinafter) mono(meth)acrylate, methoxypolyethylene glycol mono(meth)acrylate, polypropylene glycol (abbreviated to "PPG" hereinafter) mono(meth)acrylate, methoxypolypropylene glycol mono(meth)acrylate, and mono(meth)acrylate of PEG-PPG block polymer), (meth)acrylamide derivatives (e.g., (meth)acrylamide, N-methyl (meth)acrylamide, N-ethyl (meth)acrylamide, N-propyl (meth)acrylamide, N-butyl (meth)acrylamide, N,N'-dimethyl (meth)acrylamide, N,N'-diethyl (meth)acrylamide, N-hydroxyethyl (meth)acrylamide, N-hydroxypropyl (meth)acrylamide, and N-hydroxybutyl (meth)acrylamide), and acryloylmorpholine.

Examples of the water-insoluble monofunctional ethylenic unsaturated monomer include linear or branched alkyl (meth)acrylates (C4-30 compounds such as methyl (meth)acrylate, ethyl (meth)acrylate, isobutyl (meth)acrylate, lauryl (meth)acrylate, stearyl (meth)acrylate, isostearyl (meth)acrylate, and t-butyl (meth)acrylate), cyclic (meth)acrylates (C6-20 compounds such as cyclohexyl (meth)acrylate, 4-t-cyclohexyl (meth)acrylate, isobornyl (meth)acrylate, phenoxyethyl (meth)acrylate, and dicyclopentanyl (meth)acrylate), and heterocyclic (meth)acrylates (C5-20 compounds such as tetrahydrofurfuryl (meth)acrylate, 4-(meth)acryloyloxymethyl-2-methyl-2-ethyl-1,3-dioxolane, 4-(meth)acryloyloxymethyl-2-cyclohexyl-1,3-dioxolane, and adamantyl (meth)acrylate).

### Polyfunctional ethylenic unsaturated monomer

As described above, the polyfunctional ethylenic unsaturated monomers polymerize together with the monofunctional ethylenic unsaturated monomers and thus form a constituent component of the model material.

Examples of the polyfunctional ethylenic unsaturated monomer include linear or branched alkylene glycol di(meth)acrylates or alkylene glycol tri(meth)acrylates (C10-25 compounds such as 1,6-hexanediol di(meth)acrylate, tripropylene glycol di(meth)acrylate, glycerin propoxy triacrylate, neopentyl glycol di(meth)acrylate, 1,9-nonanediol di(meth)acrylate, 3-methyl-1,5-pentanediol di(meth)acrylate, and 2-n-butyl-2-ethyl-1,3-propanediol di(meth)acrylate), and alicyclic di(meth)acrylates (C10-30 compounds such as dimethylol tricyclodecane di(meth)acrylate).

### Photopolymerization initiator

The above-mentioned photopolymerization initiator initiates a monomer polymerization reaction or a monomer cross-linking reaction using an energy beam. The composition for a model material of this embodiment contains the photopolymerization initiator, thus making it possible to cure the ejected composition for a model material through irradiation with an energy beam in ink-jet stereolithography.

Examples of the photopolymerization initiator include benzoin compounds (C14-18 compounds such as benzoin, benzoin methyl ether, benzoin ethyl ether, benzoin propyl ether, and benzoin isobutyl ether), acetophenone compounds (C8-18 compounds such as acetophenone, 2,2-diethoxy-2-phenylacetophenone, 1,1-dichloroacetophenone, 2-hydroxy-2-methyl-phenylpropan-1-one, diethoxyacetophenone, 1-hydroxycyclohexylphenyl ketone, and 2-methyl-1-[4-(methylthio)phenyl]-2-morpholinopropan-1-one), anthraquinone compounds (C14-19 compounds such as 2-ethylanthraquinone, 2-t-butylanthraquinone, 2-chloroanthraquinone, and 2-amylanthraquinone), thioxanthone compounds (C13-17 compounds such as 2,4-diethylthioxanthone, 2-isopropylthioxanthone, and 2-chlorothioxanthone), ketal compounds (C16 or 17 compounds such as acetophenone dimethyl ketal and benzyldimethyl ketal), benzophenone compounds (C13 to 21 compounds such as benzophenone, 4-benzoyl-4'-methyldiphenyl sulfide, and 4,4'-bismethylaminobenzophenone), and phosphine oxides (C22-28 compounds such as 2,4,6-trimethylbenzoyldiphenylphosphine oxide, bis-(2,6-dimethoxybenzoyl)-2,4,4-trimethylpentylphosphine oxide, and bis(2,4,6-trimethylbenzoyl)-phenylphosphine oxide).

### Other components

The composition for a model material may further contain an oligomer or a prepolymer, which is a polymerizable compound, as another component. Also, the composition for a model material may contain a surface controlling agent and an ink storage stabilizer. A surface controlling agent and an ink storage stabilizer that are the same as those described in the above-described composition for a support material can be used as the surface controlling agent and the ink storage stabilizer.

### Embodiment of method for manufacturing stereolithographic article

A method for manufacturing a stereolithographic article of this embodiment is a method for manufacturing a stereolithographic article in which the ink set for stereolithography described in the embodiment above is used, the method including: forming a stereolithographic article precursor including support materials and model materials by repeating a step of irradiating the inks of the ink set for stereolithography ejected from an ink-jet printer with an energy beam; and dissolving and removing the support materials by immersing the stereolithographic article precursor in water.

In the method for manufacturing a stereolithographic article of this embodiment, the above-mentioned ink set for stereolithography is used, thus making it possible to form a stereolithographic article with an excellent shaping accuracy.

Hereinafter, the method for manufacturing a stereolithographic article of this embodiment will be described with reference to the drawings. FIG. 3 is a schematic side view showing a state in which support material ink and model material ink are ejected and are irradiated with an energy beam in an ink-jet shaping method. In FIG. 3, a three-dimensional shaping apparatus 10 includes an ink-jet head module 11 and a shaping table 12. The ink-jet head module 11 includes a stereolithographic ink unit 11a, a roller 11b, and a light source 11c. Furthermore, the stereolithographic ink unit 11a includes an ink-jet head 11aM for model material filled with ink 13 for a model material and an ink-jet head 11aS for support material filled with ink 14 for a support material.

The ink 13 for a model material is ejected from the ink-jet head 11aM for model material, and the ink 14 for a support material is ejected from the ink-jet head 11aS for support material. An energy beam 15 is emitted from the light source 11c, and thereby the ejected ink 13 for a model material and ink 14 for a support material are cured to form model materials 13PM and support materials 14PS. FIG. 3 shows a state in which model materials 13PM and support materials 14PS for forming a first layer are formed.

The support material 14PS and the model material 13PM are formed under atmospheric conditions of a temperature of 20 to 25°C, a relative humidity of 40 to 70%, and an atmospheric pressure of 985 to 1025 hPa.

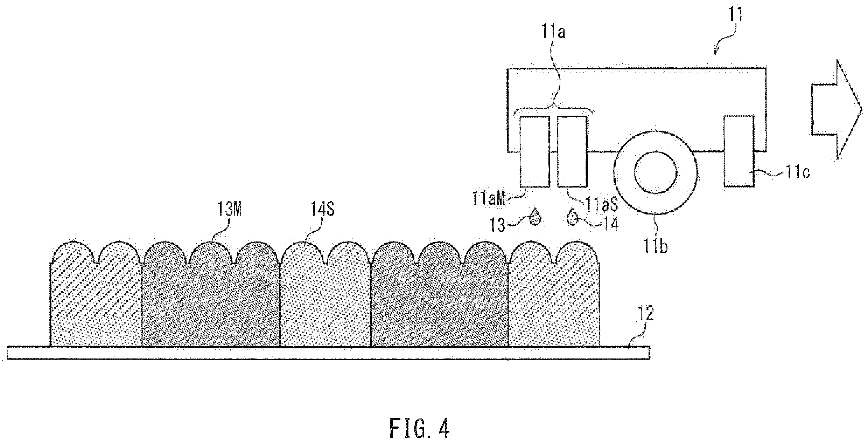

Next, further details of the method for manufacturing a stereolithographic article of this embodiment will be described with reference to the drawings. In the method for manufacturing a stereolithographic article of this embodiment, first, as shown in FIG. 4, the ink-jet head module 11 is moved relative to the shaping table 12 in an X direction (right direction in FIG. 4), and the ink 13 for a model material is ejected from the ink-jet head 11aM for model material and the ink 14 for a support material is ejected from the ink-jet head 11aS for support material. Accordingly, layers constituted by a model material precursor 13M and layers constituted by a support material precursor 14S are adjacently arranged on the shaping table 12 such that surfaces at each boundary are in contact with each other.

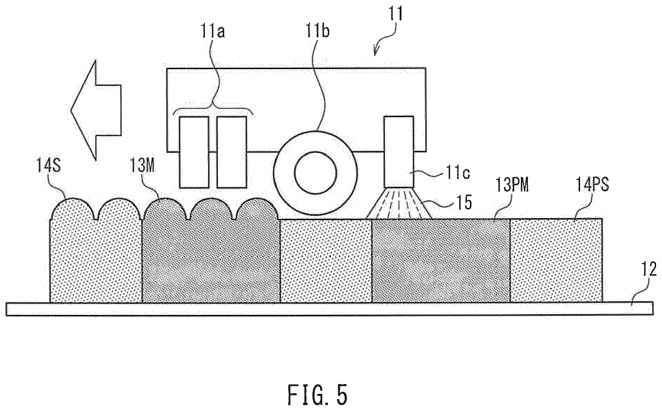

Next, as shown in FIG. 5, the ink-jet head module 11 is moved relative to the shaping table 12 in a direction opposite to the X direction (left direction in FIG. 5), and the surface of the layer constituted by the model material precursors 13M and the support material precursors 14S is made smooth using the roller 11b. Then, the energy beam 15 is emitted from the light source 11c, and thereby the layer constituted by the model material precursors 13M and the support material precursors 14S is cured to form a first layer constituted by the model materials 13PM and the support materials 14PS.

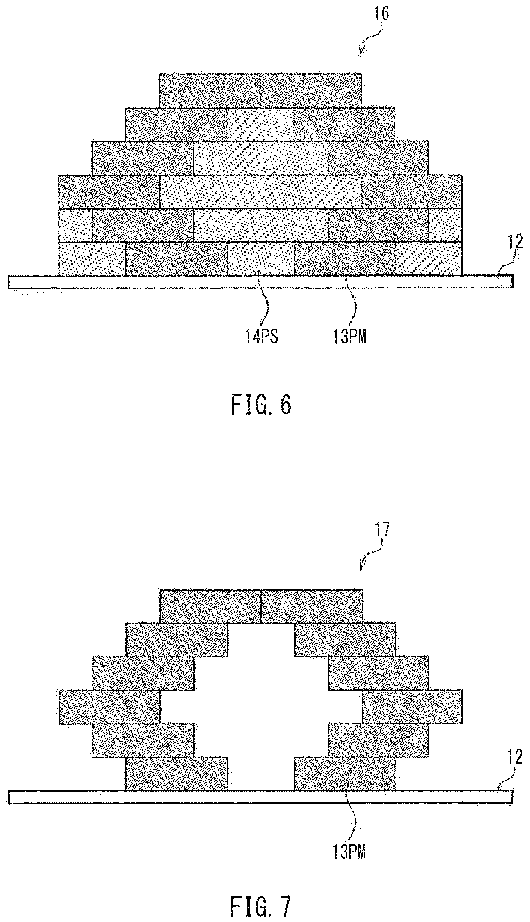

Subsequently, the shaping table 12 is lowered by a length corresponding to one layer in a Z direction, and the same process as mentioned above is performed to form a second layer constituted by the model materials and the support materials. Thereafter, by repeating the above-mentioned process, a stereolithographic article precursor 16 constituted by the model materials 13PM and the support materials 14PS is formed as shown in FIG. 6.

The processes shown in FIGS. 4 to 6 are normally also performed under atmospheric conditions of a temperature of 20 to 25°C, a relative humidity of 40 to 70%, and an atmospheric pressure of 985 to 1025 hPa.

Lastly, the support materials 14PS are dissolved and removed by immersing the stereolithographic article precursor 16 shown in FIG. 6 in water, and a stereolithographic article 17 as shown in FIG. 7 is thus formed.

In the method for manufacturing a stereolithographic article of this embodiment, a lamp light source, an LED light source, or the like can be used as the light source 11c, for example, and an LED light source is preferable from the viewpoint that the size of the three-dimensional shaping apparatus 10 can be reduced, and power consumption is low. As the energy beam 15 emitted from the light source 11c, an energy beam selected as appropriate from ultraviolet rays, near ultraviolet rays, visible rays, infrared rays, far infrared rays, and the like can be used, and ultraviolet rays or near ultraviolet rays are preferably used from the viewpoint of ease and efficiency of the curing operation.

### Examples

Hereinafter, the present invention will be described in detail based on examples. However, the present invention is not limited to the following examples. In the following description, "part" means "part by mass", unless otherwise stated.

Table 1 shows components of compositions for a support material used in examples and comparative examples, which will be described later, and Table 2 shows components of compositions for a model material used in the examples and the comparative examples.

**Table 1**

| Component | Name | Content/Trade name, specification |
|---|---|---|
| Water-soluble monofunctional ethylenic unsaturated monomer (A) | ACMO | Acryloylmorpholine / manufactured by DKSH |
| | | Trade name: ACMO (ethylenic double bond / one molecule: one bond) |
| Water-soluble resin (B) | PEG | Polyethylene glycol / manufactured by Sanyo Chemical Industries Ltd. |
| | | Trade name: PEG-1000 (molecular weight: 1000) |
| | PPG | Polypropylene glycol / manufactured by Sanyo Chemical Industries Ltd. |
| | | Trade Name: SANNIX PP-1000 (molecular weight: 1000) |
| | PTMG | Polyoxytetramethylene polyoxyethylene glycol / manufactured by NOF Corporation |
| | | Trade name: POLYCERIN DC1100 (molecular weight: 1000) |
| Photopolymerization initiator (C) (acylphosphine oxide-based) | DAROCURE TPO | 2,4,6-Trimethylbenzoyl-diphenyl-phosphine oxide / manufactured by BASF |
| | | Trade name: DAROCURE TPO |
| Surface controlling agent (D) (silicone-based) | BYK-307 | Silicon acrylate having polydimethylsiloxane structure / manufactured by BYK |
| | | Trade name: BYK-307 |
| | TEGO-Rad 2100 | Silicon acrylate having polydimethylsiloxane structure / manufactured by Evonik Japan |
| | | Trade name: TEGO-Rad2100 |
| Water-soluble organic solvent (E) | MDG | Diethylene glycol monomethyl ether / manufactured by Nippon Nyukazai Co. Ltd. |
| | | Trade name: MDG |
| Ink storage stabilizer (F) | H-TEMPO | 4-Hydroxy-2,2,6,6-tetramethylpiperidine-N-oxyl/ manufactured by Evonik Japan |
| | | Trade name: 4-HYDROXY-TEMPO |

**Table 2**

| Component | Name | Content/Trade name, specification |
|---|---|---|
| Monofunctional ethylenic unsaturated monomer (a) | ACMO | Acryloylmorpholine (water-soluble) / manufactured by DKSH |
| | | Trade name: ACMO (ethylenic double bond / one molecule: one bond) |
| | IBOA | Isobornyl acrylate (water-insoluble) / manufactured by ARKEMA |
| | | Trade name: Sartomer SR506D (ethylenic double bond / one molecule: one bond) |
| | PEA | Phenoxyethyl acrylate (water-insoluble) / manufactured by ARKEMA |
| | | Trade name: Sartomer SR339 (ethylenic double bond / one molecule: one bond) |
| Polyfunctional ethylenic unsaturated monomer (b) | HDDA | 1,6-Hexanediol diacrylate / manufactured by ARKEMA |
| | | Trade name: Sartomer SR238 (ethylenic double bond / one molecule: two bonds) |
| | TPGDA | Tripropylene glycol diacrylate / manufactured by ARKEMA |
| | | Trade name: Sartomer SR306 (ethylenic double bond / one molecule: two bonds) |
| | GPT | Glycerin propoxy triacrylate / manufactured by DAICEL-CYTEC Company, Ltd. |
| | | Trade name: OTA480 (ethylenic double bond / one molecule: three bonds) |
| Polymerizable oligomer (c) | EBECRYL 8402 | Urethane acrylate oligomer / manufactured by DAICEL-CYTEC Company, Ltd. |
| | | Trade name: EBECRYL8402 (ethylenic double bond / one molecule: two bonds) |
| | EBECRYL 3708 | Epoxy acrylate oligomer / manufactured by DAICEL-CYTEC Company, Ltd. |
| | | Trade name: EBECRYL 3708 (ethylenic double bond / one molecule: two bonds) |
| Photopolymerization initiator (d) (acylphosphine oxide-based) | LUNACURE TPO | 2,4,6-Trimethylbenzoyl-diphenyl-phosphine oxide / manufactured by DKSH |
| | | Trade name: LUNACURE TPO |
| Surface controlling agent (e) (silicone-based) | BYK-307 | Silicon acrylate having polydimethylsiloxane structure / manufactured by BYK |
| | | Trade name: BYK-307 |
| | BYK-UV3500 | Silicon acrylate having polydimethylsiloxane structure / manufactured by BYK |
| | | Trade name: BYK-UV3500 |
| Ink storage stabilizer (f) | H-TEMPO | 4-Hydroxy-2,2,6,6-tetramethylpiperidine-N-oxyl/ manufactured by Evonik Japan |
| | | Trade name: 4-HYDROXY-TEMPO |

First, the components (A) to (F) shown in Table 1 were weighed out in accordance with the blend amounts (unit: part by mass) shown in Table 3 and mixed. Inks for a support material SA1, SA2, SA3, SA4, and SA5 were thus prepared. Next, the components (a) to (f) shown in Table 2 were weighed out in accordance with the blend amounts (unit: part by mass) shown in Table 4 and mixed. Inks for a model material MO1, MO2, and MO3 were thus prepared.

**Table 3**

| Component | Name | SA1 | SA2 | SA3 | SA4 | SA5 |
|---|---|---|---|---|---|---|
| Water-soluble monofunctional ethylenic unsaturated monomer (A) | ACMO | 59.9 | 65.9 | 55.9 | 65.9 | 65.9 |
| Water-soluble resin (B) | PEG | - | - | - | 30 | - |
| | PPG | - | - | - | - | 30 |
| | PTMG | 30 | 30 | 40 | - | - |
| Photopolymerization initiator (C) (acylphosphine oxide-based) | DAROCURE TPO | 4 | 4 | 4 | 4 | 4 |
| Surface controlling agent (silicone-based) | BYK-307 | - | 0.1 | - | 0.1 | 0.1 |
| | TEGO-Rad2100 | - | - | 0.1 | - | - |
| Water-soluble organic solvent (E) | MDG | 6 | - | - | - | - |
| Ink storage stabilizer (F) | H-TEMPO | 0.1 | - | - | - | - |
| Total | | 100.0 | 100.0 | 100.0 | 100.0 | 100.0 |

**Table 4**

| Component | Name | MO1 | MO2 | MO3 |
|---|---|---|---|---|
| Monofunctional ethylenic unsaturated monomer (a) | ACMO | - | 20 | 10 |
| | IBOA | 25.9 | 25.9 | 25.8 |
| | PEA | 20 | - | 10 |
| Polyfunctional ethylenic unsaturated monomer (b) | HDDA | 20 | 20 | 20 |
| | GPT | 10 | 10 | 10 |
| Polymerizable oligomer (c) | EBECRYL8402 | - | 20 | 10 |
| | EBECRYL3708 | 20 | - | 10 |
| Photopolymerization initiator (d) (acylphosphine oxide-based) | LUNACURE TPO | 4 | 4 | 4 |
| Surface controlling agent (e) (silicone-based) | BYK-307 | - | 0.1 | - |
| | BYK-UV3500 | - | - | 0.2 |
| Ink storage stabilizer (f) | H-TEMPO | 0.1 | - | - |
| Total | | 100.0 | 100.0 | 100.0 |

Next, as shown in Table 5, the produced inks for a support material and inks for a model material were used in combination to prepare ink sets, and the support material ink and the model material ink of each ink set were separately applied on a glass slide using a bar coater (#14) to form printed films with a thickness of 3 µm. The printed films were irradiated with ultraviolet rays using a metal halide lamp as a light source such that the total irradiation light amount was 400 mJ/cm², and were cured to form a support material cured film and a model material cured film.

Subsequently, the support material ink and the model material ink of each ink set were ejected onto the support material cured film, and the contact angles of the inks were measured 0.3 seconds after the inks hit the support material cured film. Similarly, the support material ink and the model material ink were ejected onto the model material cured film, and the contact angles of the inks were measured 0.3 seconds after the inks hit the model material cured film.

The contact angles were measured using a contact angle measurement apparatus "PG-X", which is manufactured by MATSUBO Corporation, on conditions that the dynamic mode was set to the dropping mode and the drop volume was set to 1.8±0.1 µL.

Table 5 shows the results. In Table 5, the contact angles of the support material ink and model material ink with respect to the support material cured film are shown as SS and SM, respectively, and the contact angles of the support material ink and model material ink with respect to the model material cured film are shown as MS and MM, respectively.

Table 5 also shows the results of Evaluations 1 to 4 below.

### Evaluation 1

Cases where both the contact angle SS and the contact angle SM were 25 degrees or more and 35 degrees or less were shown as "A", and cases where at least one of the contact angle SS and the contact angle SM fell outside the range from 25 degrees to 35 degrees were shown as "B".

### Evaluation 2

Cases where a difference between the contact angle SS and the contact angle SM was 10 degrees or less were shown as "A", and cases where the difference exceeded 10 degrees were shown as "B".

### Evaluation 3

Cases where both the contact angle MS and the contact angle MM were 35 degrees or more and 70 degrees or less were shown as "A", and cases where at least one of the contact angle MS and the contact angle MM fell outside the range from 35 degrees to 70 degrees were shown as "B".

### Evaluation 4

Cases where a difference between the contact angle MS and the contact angle MM was 20 degrees or less were shown as "A", and cases where the difference exceeded 20 degrees were shown as "B".

**Table 5**

| Ink set | 1 | 2 | 3 | 4 | 5 | 6 | 7 | 8 | 9 | 10 | 11 | 12 | 13 |
|---|---|---|---|---|---|---|---|---|---|---|---|---|---|
| Support material ink | SA1 | SA1 | SA1 | SA2 | SA2 | SA2 | SA3 | SA3 | SA3 | SA4 | SA4 | SA5 | SA5 |
| Model material ink | MO1 | MO2 | MO3 | MO1 | MO2 | MO3 | MO1 | MO2 | MO3 | MO1 | MO2 | MO1 | MO2 |
| Contact angle SS | 24 | 24 | 24 | 29 | 29 | 29 | 33 | 33 | 33 | 29 | 29 | 33 | 33 |
| Contact angle SM | 28 | 25 | 24 | 28 | 26 | 24 | 33 | 31 | 30 | 26 | 28 | 33 | 32 |
| Contact angle MS | 62 | 68 | 74 | 58 | 65 | 72 | 55 | 63 | 68 | 58 | 66 | 53 | 63 |
| Contact angle MM | 38 | 55 | 62 | 38 | 55 | 62 | 38 | 55 | 62 | 38 | 55 | 38 | 55 |
| Evaluation 1 | B | B | B | A | A | B | A | A | A | A | A | A | A |
| Evaluation 2 | A | A | A | A | A | A | A | A | A | A | A | A | A |
| Evaluation 3 | A | A | B | A | A | B | A | A | A | A | A | A | A |
| Evaluation 4 | B | A | A | A | A | A | A | A | A | A | A | A | A |

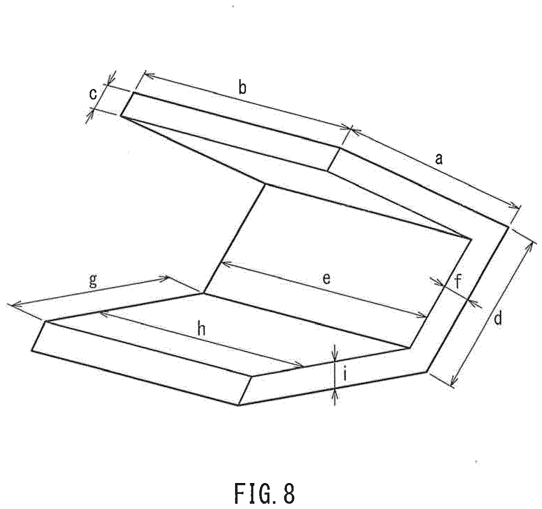

The ink sets whose results of Evaluation 1 were shown as "A" in Table 5 were taken as examples, and the ink sets whose results of Evaluation 1 were shown as "B" were taken as comparative examples. Each ink set was set in the three-dimensional shaping apparatus, and a shaped article was produced through ink-jet stereolithography in accordance with the procedures shown in FIGS. 4 to 7. FIG. 8 is an external view of a final shaped article obtained by removing the support materials from the obtained shaped article.

Next, in the shaped articles formed as mentioned above, the lengths of nine portions a to i shown in FIG. 8 were measured using a vernier caliper, and the actual measurement data of the nine portions a to i were compared with the CAD shaping data (data of the nine portions a to i) used in the ink-jet stereolithography. The differences in a shaping accuracy was measured based on the results, and the shaping accuracy was evaluated in accordance with the following criteria.

If all of the actual data of the portions a to i of the shaped article were different by less than 2% from the CAD shaping data: the shaping accuracy was evaluated as "A" ("Good").

If all of the actual data of the portions a to i were different by 2% to 3%: the shaping accuracy was evaluated as "B" ("Fair").

If all of the actual data of the portions a to i were different by 3% or more: the shaping accuracy was evaluated as "C" ("Poor").

Table 6 shows the results.

**Table 6**

| Ink set | 1 | 2 | 3 | 4 | 5 | 6 | 7 | 8 | 9 | 10 | 11 | 12 | 13 |
|---|---|---|---|---|---|---|---|---|---|---|---|---|---|
| Ex. Comp. Ex. | Comp. Ex. 1 | Comp. Ex. 2 | Comp. Ex. 3 | Ex. 1 | Ex. 2 | Comp. Ex. 4 | Ex. 3 | Ex. 4 | Ex. 5 | Ex. 6 | Ex. 7 | Ex. 8 | Ex. 9 |
| Evaluation of shaping accuracy | C | C | C | A | A | C | A | A | B | A | B | A | A |

It can be understood from Table 6 that the satisfactory results were obtained regarding the shaping accuracy of the shaped articles of Examples 1 to 9 in which both the contact angle SS and the contact angle SM were within a range from 25 degrees to 35 degrees. On the other hand, it can be understood that the shaping accuracy was unsatisfactory in Comparative Examples 1 to 4 in which at least one of the contact angle SS and the contact angle SM fell outside the range from 25 degrees to 35 degrees.

### Industrial Applicability

With the present invention, it is possible to provide an ink set for stereolithography that can be used to form a stereolithographic article with an excellent shaping accuracy through ink-jet stereolithography. The present invention is widely applicable to ink-jet stereolithography in which a three-dimensional shaping apparatus is used.

### Description of Reference Numerals

- 10: Three-dimensional shaping apparatus
- 11: Ink-jet head module
- 11a: Stereolithographic ink unit
- 11aM: Ink-jet head for model material
- 11aS: Ink-jet head for support material
- 11b: Roller
- 11c: Light source
- 12: Shaping table
- 13: Model material ink
- 13M: Model material precursor
- 13PM: Model material
- 14: Support material ink
- 14S: Support material precursor
- 14PS: Support material
- 15: Energy beam
- 16: Shaped article precursor
- 17: Shaped article

## Claims

1. An ink set for stereolithography to be used in ink-jet stereolithography, comprising:
a composition for a support material to be used to shape a support material; and
a composition for a model material to be used to shape a model material,
wherein when the composition for a support material is ejected onto a support material cured article, which is a cured article of the composition for a support material, a contact angle of the composition for a support material with respect to the support material cured article at 0.3 seconds after the composition for a support material hits the support material cured article is taken as a contact angle SS,
when the composition for a model material is ejected onto a support material cured article, which is a cured article of the composition for a support material, a contact angle of the composition for a model material with respect to the support material cured article at 0.3 seconds after the composition for a model material hits the support material cured article is taken as a contact angle SM, and
the contact angle SS and the contact angle SM are 25 degrees or more and 35 degrees or less.

2. The ink set for stereolithography according to claim 1,
wherein a difference between the contact angle SS and the contact angle SM is 10 degrees or less.

3. The ink set for stereolithography according to claim 1 or 2,
wherein when the composition for a support material is ejected onto a model material cured article, which is a cured article of the composition for a model material, a contact angle of the composition for a support material with respect to the model material cured article at 0.3 seconds after the composition for a support material hits the model material cured article is taken as a contact angle MS,
when the composition for a model material is ejected onto a model material cured article, which is a cured article of the composition for a model material, a contact angle of the composition for a model material with respect to the model material cured article at 0.3 seconds after the composition for a model material hits the model material cured article is taken as a contact angle MM, and
the contact angle MS and the contact angle MM are 35 degrees or more and 70 degrees or less.

4. The ink set for stereolithography according to claim 3,
wherein a difference between the contact angle MS and the contact angle MM is 20 degrees or less.

5. The ink set for stereolithography according to any one of claims 1 to 4,
wherein the composition for a support material contains a water-soluble monofunctional ethylenic unsaturated monomer, a water-soluble resin, and a photopolymerization initiator.

6. The ink set for stereolithography according to claim 5,
wherein the water-soluble monofunctional ethylenic unsaturated monomer includes a (meth)acrylamide derivative,
the water-soluble resin has at least one group selected from the group consisting of an oxyethylene group, an oxypropylene group, and an oxytetramethylene group, and
the photopolymerization initiator includes an acylphosphine oxide-based photopolymerization initiator.

7. The ink set for stereolithography according to any one of claims 1 to 4,
wherein the composition for a model material contains a monofunctional ethylenic unsaturated monomer, a polyfunctional ethylenic unsaturated monomer, and a photopolymerization initiator.

8. The ink set for stereolithography according to claim 7,
wherein the monofunctional ethylenic unsaturated monomer includes at least one type of water-insoluble monofunctional ethylenic unsaturated monomer,
the water-insoluble monofunctional ethylenic unsaturated monomer includes at least one type of water-insoluble monofunctional ethylenic unsaturated monomer having a number-average molecular weight of 500 or more, and
the photopolymerization initiator includes an acylphosphine oxide-based photopolymerization initiator.

9. A method for manufacturing a stereolithographic article in which the ink set for stereolithography according to any one of claims 1 to 8 is used, the method comprising:
forming a stereolithographic article precursor including support materials and model materials by repeating a step of irradiating the inks of the ink set for stereolithography ejected from an ink-jet printer with an energy beam; and
dissolving and removing the support materials by immersing the stereolithographic article precursor in water.
